# FASCICULE DE BREVET EUROPEEN

(11) **EP 3 390 146 B1**
(45) Date de publication et mention de la délivrance du brevet: **30.12.2020**
(21) Numéro de dépôt: 16815594.3
(22) Date de dépôt: 24.11.2016
(51) Int. Cl.: B60N 2/22, B60N 2/36, B60N 2/60

(54) **DISPOSITIF DE VERROUILLAGE MULTI-POSITIONS D'UN DOSSIER DE SIEGE ARRIERE DE VEHICULE AUTOMOBILE**
VERRIEGELUNGSVORRICHTUNG MIT MEHREREN STELLUNGEN EINER RÜCKENLEHNE EINES RÜCKSITZES EINES KRAFTFAHRZEUGS
MULTI-POSITION LOCKING DEVICE OF A BACKREST OF A REAR SEAT OF AN AUTOMOTIVE VEHICLE

(30) Priorité: 17.12.2015 FR 1562641
(43) Date de publication de la demande: 24.10.2018
(73) Titulaire: PSA Automobiles SA, 78300 Poissy (FR)
(72) Inventeur: SAUVAGE, Sébastien, 25200 Grand Charmont (FR); AFROUG, Mohamed, 90160 Bessoncourt (FR); PINTO TEIXEIRA, Frédéric, 91160 Ballainvilliers (FR)
(86) Numéro de dépôt international: PCT/FR2016/053074
(87) Numéro de publication internationale: WO 2017/103365

(56) Documents cités:
- EP-A1- 1 470 953
- WO-A1-2011/022714
- DE-A1-102009 022 518
- DE-B3-102006 056 599
- FR-A1- 2 446 695

## Description

### Domaine de l'invention

La présente invention concerne d'une façon générale les dispositifs de verrouillage d'un dossier de siège arrière sur la structure d'un véhicule automobile.

Elle vise en particulier de tels dispositifs permettant au passager assis sur un tel siège arrière de verrouiller son dossier suivant plusieurs inclinaisons distinctes.

### Arrière-plan de l'invention

Les véhicules automobiles sont généralement équipés en zone arrière de l'habitacle de deux sièges doté d'une assise ou banquette commune propre à recevoir plusieurs passagers et dont les dossiers voisins sont rabattables indépendamment l'un de l'autre selon un axe de pivotement transversal afin de permettre une modularité de l'espace de rangement.

Chaque dossier de véhicule automobile est généralement associé à un dispositif de verrouillage qui est chargé de le solidariser à un élément de structure du véhicule afin d'empêcher qu'il se rabattre sur les passagers en cas de choc du véhicule et sous l'effet des bagages du coffre qui viennent le heurter.

Un tel dispositif de verrouillage est constitué classiquement par un verrou monté sur le dossier et commandé par un organe de déverrouillage, ainsi que par une gâche montée sur un élément de structure du véhicule.

Toutefois, le dossier ne peut-être verrouillé que dans une unique position correspondant à une inclinaison prédéterminée.

Cette non adaptabilité de l'inclinaison du dossier en fonction de la morphologie du passager engendre un manque de confort aux places arrière du véhicule comparativement aux places avant.

Afin de palier à cet inconvénient, des dispositifs de verrouillage multi-positions du dossier de siège arrière ont été développés ces dernières années.

Le document WO201122714 divulgue un système de verrouillage associé à un siège, comprenant un boîtier ayant une ouverture, un bras de verrouillage disposé de façon mobile dans l'ouverture et configurée pour se déplacer entre une position déverrouillée et une position verrouillée, et un élément de sollicitation ayant une première partie qui met en prise le bras de verrouillage pour maintenir le bras de verrouillage dans la position déverrouillée et qui sollicite le bras de verrouillage vers la position verrouillée lorsque la première partie du bras de verrouillage se désengage. Le document DE102009022518 divulgue un siège de véhicule automobile, un dossier, qui est une position angulaire par rapport à la structure du véhicule est susceptible de pivoter, et un module de positionnement, par laquelle le dossier dans différentes positions d'utilisation est relié de manière amovible à la structure du véhicule, dans lequel le module de réglage de verrouillage et un verrou contre-élément verrouillable est, dans lequel, le module de verrouillage un support, à la structure du véhicule ou sur le dos est fixé, et un transporteur, par pivotement du dossier par rapport au support est mobile. Le document DE102006056599 divulgue un soufflet constitué d'un premier matériau souple et souple qui présente à sa première extrémité une bordure s'étendant horizontalement et via le bord extérieur de l'enceinte de la bordure qui s'étend sur chaque côté au moins deux pattes. Les pattes en forme de 0 font partie d'un rail relié de manière non amovible à la bordure et dans lequel les pattes en forme de 0 et / ou le rail sont constitués d'un matériau de section dure.

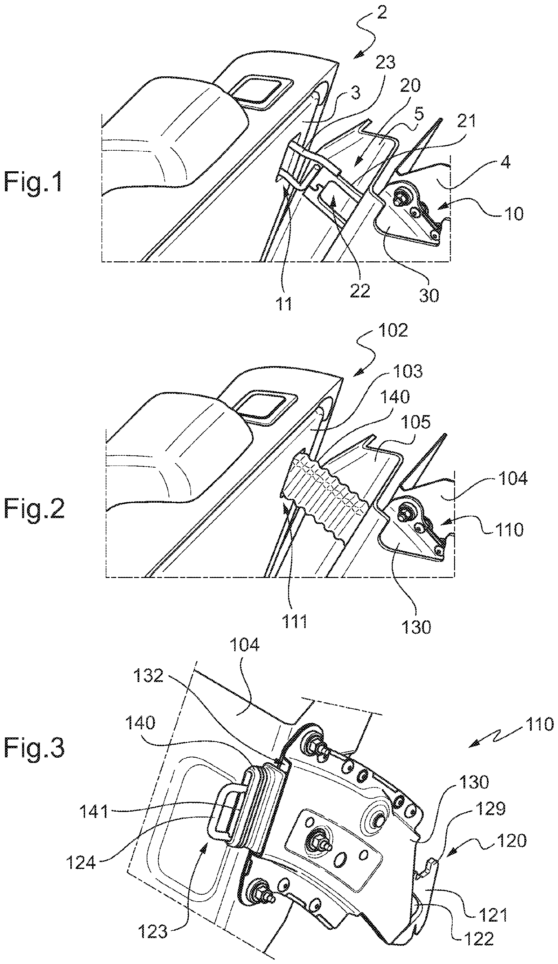

La figure 1 représente une vue en perspective de la zone d'implantation d'un tel dispositif de verrouillage multi-positions 10 conforme à l'art antérieur.

Ce dispositif 10 comporte un verrou lié à l'armature du dossier 2 d'un siège arrière de véhicule automobile et dissimulé par la garniture 3 de ce dossier 2, ainsi qu'une gâche 20 partiellement logée dans un boîtier support 30 fixé à un élément de structure de ce véhicule constitué ici par le renfort de fixation de gâche de dossier arrière 4.

Le verrou comprend un pêne rotatif s'étendant à l'intérieur d'un corps délimitant un avaloir de réception 11 pour la gâche 20.

Cette dernière comporte une platine 21 présentant une lumière 22 traversée par un organe de guidage à coulissement solidaire du boîtier support 30 et non visible sur la figure 1 car dissimulé par le boîtier support 30.

La platine 21 est prolongée à l'avant par un fil de gâche 23 saillant en permanence à l'avant du boîtier 30 au travers d'une ouverture ménagée sur sa face avant, ce fil de gâche étant destiné à venir en prise avec le pêne du verrou pour verrouiller le dossier 2 sur le renfort de fixation 4.

La gâche 20 est ainsi apte, tout en demeurant en prise avec le verrou, à coulisser dans le boîtier support 30 selon une course s'étendant entre une première et une seconde position de butée correspondant respectivement à une inclinaison maximale vers l'avant et vers l'arrière du dossier 2.

Le dispositif 10 comprend également des moyens non visibles pour verrouiller la gâche 20 par rapport au boîtier support 30 dans plusieurs positions.

Sur une partie de la course de la gâche proche de la seconde position de butée, on peut constater qu'une portion de la lumière 22 de la platine 21 saille à l'avant du boîtier support 30 au travers de son ouverture.

Une personne ayant positionné une main entre le dossier 2 et la garniture d'habillage 5 recouvrant le boîtier support 30 et le renfort de fixation 4 peut alors introduire par inadvertance l'un de ses doigts dans cette portion de la lumière 22 saillant à l'avant du boîtier support 30, avec le risque que ce doigt soit alors pincé voire écrasé si le passager assis sur le siège entraine dans le même temps le pivotement vers l'arrière du dossier 2 pour ajuster son inclinaison.

### Objet et résumé de l'invention

La présente invention vise donc à améliorer le niveau de sécurité d'un tel dispositif.

Elle propose à cet effet un dispositif de verrouillage multi-positions d'un dossier rabattable de siège arrière de véhicule automobile, comportant un verrou lié audit dossier ainsi qu'une gâche partiellement logée dans un boîtier support fixé à un élément de structure dudit véhicule,
ladite gâche comprenant une platine présentant une lumière traversée par un organe de guidage à coulissement solidaire dudit boîtier support, ladite platine étant prolongée à l'avant par un organe d'accroche saillant en permanence à l'avant dudit boîtier support au travers d'une ouverture ménagée sur sa face avant, ledit organe d'accroche étant destiné à venir en prise avec un pêne que comprend ledit verrou pour verrouiller ledit dossier sur ledit élément de structure du véhicule ;
ladite gâche étant apte, tout en demeurant en prise avec ledit verrou, à coulisser dans ledit boîtier support selon une course prédéterminée, une portion de ladite lumière de la platine saillant à l'avant dudit boîtier support au travers de ladite ouverture sur une partie de ladite course de la gâche ;
ledit dispositif comportant en outre des moyens de verrouillage de ladite gâche sur ledit boîtier support dans plusieurs positions ;
caractérisé en ce qu'il comporte en outre des moyens de protection anti-pincement comportant un soufflet s'étendant à l'avant dudit boîtier support depuis le pourtour de ladite ouverture sur lequel il est fixé, ledit soufflet étant traversé par ladite gâche et agencé de sorte à entourer en permanence ladite portion saillante de ladite lumière de la platine, et en ce que l'organe d'accroche est constitué par un fil de gâche métallique en U dont la base forme un brin d'accroche apte à coopérer avec ledit pêne et dont les extrémités libres des deux branches sont fixées sur la portion avant de ladite platine, lesdits moyens de protection anti-pincement comportant en outre un élément rigide de fermeture obturant partiellement l'extrémité avant dudit soufflet entre les deux dites branches du fil de gâche, ledit élément de fermeture étant apte à coopérer sur une partie de la course de ladite gâche avec l'extrémité avant de ladite platine ou avec l'extrémité libre recourbée de l'une desdites branches de sorte à entrainer l'allongement vers l'avant dudit soufflet.

Le soufflet que comporte le dispositif de verrouillage multi-positions selon l'invention permet ainsi d'éviter toute insertion accidentelle d'un doigt d'un usager ou d'un objet quelconque au travers de la portion saillante de la lumière de la platine sur une partie de la course de la gâche.

Selon des caractéristiques préférées dudit dispositif de verrouillage selon l'invention :
- ledit élément de fermeture est rapporté puis fixé sur ledit soufflet après la mise en place de ce dernier sur ledit boîtier support ;
- ledit élément de fermeture est fixé sur ledit soufflet par soudage ultrasons ;
- ledit organe d'accroche est constitué par un fil de gâche métallique en U dont la base forme un brin d'accroche apte à coopérer avec ledit pêne et dont les extrémités libres des deux branches sont fixées sur la portion avant de ladite platine, lesdits moyens de protection anti-pincement comportant en outre un élément de liaison rigide s'étendant fixement entre les deux dites branches du fil de gâche et sur lequel la portion avant dudit soufflet est fixée ;
- ledit élément de liaison est constitué par deux demi-corps venus de moulage à partir d'un polymère thermoplastique éventuellement chargé en fibres minérales et assemblés l'un à l'autre par soudage ultrasons ;
- ledit soufflet est fixé audit élément de liaison par rivetage ;
- ledit soufflet est réalisé dans un matériau élastomère tel que le caoutchouc nitrile ;
- lesdits moyens de verrouillage de ladite gâche sur ledit boîtier support sont de type motorisés et permettent également de régler de manière continue la position de ladite gâche par rapport audit boîtier support sur l'ensemble de sa course ; et/ou
- lesdits moyens de réglage et de verrouillage de ladite gâche comportent une crémaillère s'étendant le long de la majeure portion du bord supérieur de ladite platine entre deux butées d'extrémité, ladite crémaillère coopérant avec un pignon denté logé dans ledit boîtier support et monté à rotation sur un axe transversal motorisé.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 2 représente une vue en perspective de la zone d'implantation d'un dispositif conforme à l'invention de verrouillage sécurisé multi-positions d'un dossier de siège arrière de véhicule automobile ;
- la figure 3 est une vue en perspective de trois quart avant du dispositif de verrouillage de la figure 2 ;
- la figure 4 représente une vue de côté du dispositif de verrouillage de la figure 3, la gâche étant verrouillée sur le support dans sa première position de fin de course correspondant à la configuration d'inclinaison maximale du dossier vers l'arrière ;
- la figure 5 est un agrandissement du détail V de la figure 4 ;
- la figure 6 est une vue similaire à la figure 5 mais sur laquelle la gâche est verrouillée sur le support dans une position intermédiaire correspondant à une configuration d'inclinaison intermédiaire du dossier ;
- la figure 7 est une vue similaire à la figure 5 mais sur laquelle la gâche est verrouillée sur le support dans sa seconde position de fin de course correspondant à une configuration d'inclinaison maximale du dossier vers l'avant ; et
- la figure 8 représente une vue de la portion avant de la gâche et des moyens de protection associés d'un dispositif de verrouillage selon un deuxième mode de réalisation de l'invention.

### Description détaillée de plusieurs modes préférés de réalisation

Dans la description qui va suivre et par convention, les termes « avant », « arrière » et « transversal» seront définis par rapport à l'orientation habituelle d'un siège monté dans un véhicule automobile.

Le dossier 102 de siège arrière représenté sur la figure 2 est monté pivotant par rapport à une assise ou à un châssis solidaire de la structure du véhicule selon un axe transversal de manière à pouvoir être rabattu vers l'avant, notamment pour offrir un espace de chargement supplémentaire dans le coffre.

Ce dossier 102 peut être lié rigidement à un élément de structure du véhicule 104 (constitué en l'espèce par le renfort de fixation de gâche de dossier arrière) grâce au dispositif de verrouillage 110 suivant une plage d'inclinaison réglable de manière continue entre une première configuration d'inclinaison maximale vers l'arrière et une seconde configuration d'inclinaison maximale vers l'avant.

Ce dispositif de verrouillage multi-positions 110 comporte classiquement un verrou lié à l'armature du dossier 102 (ce verrou étant dissimulé sur la figure 2 sous la garniture 103 de ce dossier 102), ainsi qu'une gâche 120 partiellement logée dans un boîtier support 130 fixé au renfort de fixation 104 (ces derniers étant recouverts par une garniture d'habillage 105 visible sur la figure 2).

Le verrou, bien connu en soi, comporte classiquement un pêne rotatif en forme de fourche s'étendant sensiblement horizontalement à l'intérieur d'un corps délimitant un avaloir de réception 111 pour la gâche 120.

Cette dernière comporte une platine métallique 121 prolongée à l'avant par un fil de gâche métallique 123 en U dont la base 124, s'étendant sensiblement radialement à l'axe de pivotement du dossier 102, forme un brin d'accroche saillant en permanence à l'avant du boîtier 130 au travers d'une ouverture 132 ménagée sur sa face avant (figure 3), ce brin d'accroche 124 étant destiné à venir en prise avec le pêne du verrou pour verrouiller le dossier 102 sur le renfort de fixation 4.

L'extrémité libre recourbée 125A de la première branche 125 du fil de gâche 123 s'étend radialement à l'axe de pivotement du dossier 102 en étant soudée le long du bord avant de la platine 121, tandis que l'extrémité libre 126A de la seconde branche 126 s'étend tangentiellement en étant soudée sur la portion avant du bord supérieur de cette platine 121.

Lors de l'insertion du fil de gâche 123 dans l'avaloir de réception 111 du verrou, le pêne est entrainé en rotation vers une position fermée dans laquelle il retient la base radiale 124 de ce fil de gâche 123 et verrouille ainsi le dossier 102 sur le renfort de fixation 104 du véhicule.

Le déverrouillage du dossier 102 est réalisé via un mécanisme non représenté relié au verrou et actionnable par une commande située en partie supérieure du dossier 102, l'actionnement de ce mécanisme ayant pour effet de désengager le pêne du fil 123 de la gâche 120.

La gâche 120 est montée coulissante dans le boîtier support 130, selon une course en arc de cercle centrée sur l'axe de pivotement du dossier 102 et correspondant sensiblement à celle que parcourt le verrou lors de la modification de l'angle d'inclinaison de ce dossier 102, de sorte à demeurer en prise avec ce verrou durant le déplacement du dossier 102.

Pour ce faire, la platine 121 présente sur quasiment l'ensemble de sa longueur une lumière oblongue en arc de cercle 122, centrée sur l'axe de pivotement du dossier 102 et traversée par un organe de guidage à coulissement 131 solidaire du boîtier support 130.

Cet organe de guidage est formé ici par une plaque métallique 131 nettement plus courte que la lumière 122 afin d'autoriser le coulissement de la gâche 120, et présentant une forme arquée complémentaire de celle de la lumière 122 de sorte à limiter les jeux.

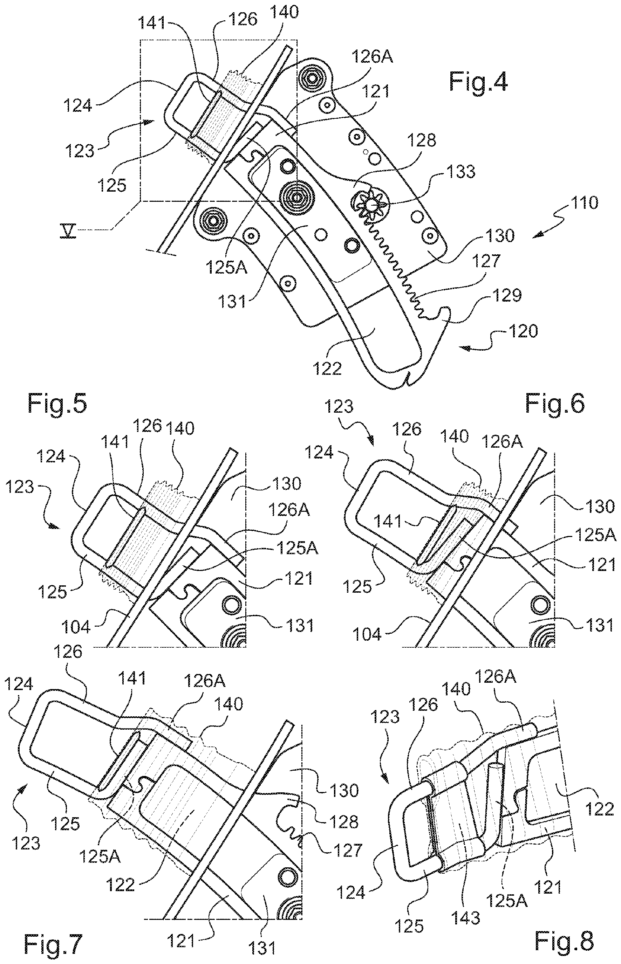

La gâche 120 est ainsi apte, tout en demeurant en prise avec le verrou, à coulisser dans le boîtier support 130 entre une première position de butée correspondant à l'inclinaison maximale vers l'arrière du dossier 102 (figures 3 à 5), et une seconde position de butée correspondant à l'inclinaison maximale vers l'avant de ce dossier 102 (figures 2 et 7).

Sur une partie de la course de la gâche 120 proche de la seconde position de butée, une portion de la lumière 122 de la platine 121 saille à l'avant du boîtier support 130 au travers de l'ouverture 132.

Le dispositif 110 comporte également des moyens motorisés de réglage continu et de verrouillage de la position de la gâche 120 par rapport au boîtier support 130 sur l'ensemble de sa course.

Ces moyens comportent une crémaillère 127 s'étendant le long de la majeure partie du bord supérieur de la platine 121 entre deux butées d'extrémité 128, 129, cette crémaillère 127 coopérant avec un pignon denté 133 logé dans le boîtier support 130 et monté à rotation sur un axe transversal motorisé.

Selon l'invention, le dispositif 110 comporte en outre des moyens de protection anti-pincement comportant un soufflet extensible 140 doté d'une série de plis orientés sensiblement radialement et s'étendant à l'avant du boîtier support 130 depuis le pourtour de l'ouverture 132 sur lequel il est fixé.

Le soufflet 140, réalisé de préférence dans un matériau élastomère (tel que le caoutchouc nitrile) ou thermoplastique, est traversé par la gâche 120 dont le brin d'accroche 124 du fil de gâche 123 saille en permanence à l'avant de ce dernier.

Les moyens de protection comprennent également un élément rigide de fermeture 141 obturant partiellement l'extrémité avant du soufflet 140 entre les deux branches 125, 126 du fil de gâche 123, et destiné à coopérer avec l'extrémité libre recourbée 125A de la première branche 125 du fil de gâche 123 sur une partie de la course de la gâche 120 de sorte à entrainer l'allongement vers l'avant du soufflet 140.

Cet élément de fermeture 141 est préférentiellement venu de moulage d'une seule pièce à partir d'un polymère thermoplastique tel que le polypropylène (PP), l'acrylonitrile butadiène styrène (ABS) ou encore le polyamide (PA), éventuellement chargé en fibres minérales de sorte à renforcer sa tenue mécanique.

Il est rapporté puis fixé sur le soufflet 140 après la mise en place de ce dernier sur le boîtier 130 par collage, sertissage ou encore soudage par ultrasons.

On va maintenant décrire le fonctionnement des moyens de protection selon l'invention à l'appui des figures 5 à 7.

Sur la figure 5, la gâche 120 occupe sa première position de butée correspondant à l'inclinaison maximale vers l'arrière du dossier 102 et dans laquelle la platine 121 est intégralement contenue à l'intérieur du boîtier support 130.

Dans cette position, l'extrémité libre recourbée 125A de la branche 125 du fil de gâche 123 se trouve à l'écart de l'élément 141, de sorte que le soufflet 140 non sollicité occupe sa position rétractée de repos.

L'entrainement à rotation du pignon 133 dans le sens des aiguilles d'une montre par l'intermédiaire d'une commande actionnée par un passager souhaitant faire pivoter le dossier 102 vers l'avant, va entraîner le coulissement vers l'avant de la gâche 120 de sorte que son fil de gâche 123 saille de plus en plus de l'ouverture 132 du boîtier support 130.

Dans un premier temps, le soufflet 140 n'est pas sollicité de sorte qu'il demeure dans sa position de repos.

Lorsque la gâche 120 arrive environ à mi course, l'extrémité libre recourbée 125A de la première branche 125 du fil de gâche 123 vient au contact de la face arrière de l'élément rigide de fermeture 141 (figure 6).

La poursuite du mouvement de coulissement vers l'avant de la gâche 120 va alors entrainer de déplacement de cet élément de fermeture 141 poussé par cette extrémité libre 125 du fil de gâche 123, et par voie de conséquence l'allongement du soufflet 140.

La figure 7 représente la gâche 120 dans sa seconde position de butée correspondant à l'inclinaison maximale vers l'avant du dossier 102 dans laquelle la platine 121 (et donc la lumière 122 de cette dernière) saille le plus à l'avant du boîtier support 130 au travers de l'ouverture 132 en étant intégralement entourée par le soufflet 140 qui occupe alors sa configuration d'allongement maximum, de sorte à empêcher l'introduction d'un doigt ou d'un objet quelconque au travers de la portion saillante de cette lumière 122 (voir également la figure 2).

Selon une variante de réalisation non représentée, l'extrémité libre 125A de la première branche 125 du fil de gâche 123 s'étend tangentiellement à l'axe de pivotement du dossier 102 en étant soudée sur la portion avant du bord inférieur de la platine 121, de sorte que l'allongement du soufflet est alors provoqué par le bord avant de la platine 121 venant au contact de la face arrière de l'élément rigide de fermeture 141

La figure 8 illustre un autre mode de réalisation de l'invention dans lequel le soufflet 140 est lié rigidement au fil de gâche 123 par l'intermédiaire d'un élément de liaison 143 s'étendant rigidement entre ses deux branches 124, 125 et sur lequel la portion avant de ce soufflet 140 est ensuite fixée de préférence par rivetage.

Cet élément de liaison 143 est constitué de préférence par deux demi-corps venus de moulage à partir d'un polymère thermoplastique éventuellement chargé en fibres minérales et assemblés l'un à l'autre par soudage ultrasons.

Selon ce mode de réalisation, le soufflet 140 commence à s'allonger dès que la gâche 120 s'écarte de sa première position de butée correspondant à l'inclinaison maximale vers l'arrière du dossier 102, cette sollicitation plus importante pouvant cependant occasionner à terme une usure plus rapide de ce soufflet 140.

Dans les deux modes de réalisation illustrés respectivement par les figures 2 à 7 et par la figure 8, le soufflet 140 entoure en permanence la portion saillante de la platine 121 de la gâche 120, indépendamment de l'amplitude de sa course, et sans jamais couvrir la base radiale 124 de son fil de gâche 123 coopérant avec le pêne du verrou, de sorte à éviter que ce dernier entraine une torsion ou une détérioration du soufflet 140.

L'utilisation de ces moyens de protection est donc particulièrement bien adaptée pour des dispositifs de verrouillage multi-positions d'un dossier de siège arrière dont la gâche présente une amplitude de course importante.

Selon un autre mode de réalisation non représenté, les moyens de protection sont simplement constitués par un soufflet non extensible dont l'organe d'accroche de la gâche saille en permanence, cet organe d'accroche n'étant alors pas nécessairement constitué par un fil de gâche mais par exemple par un crochet.

Toutefois, ce mode particulier n'étant envisageable que lorsque la course de la gâche est réduite afin que ce soufflet puisse entourer en permanence la portion saillante de la platine de la gâche.

Bien entendu, la présente invention ne se limite pas aux formes de réalisation décrites et représentées, mais elle englobe toute variante d'exécution à la portée de l'homme du métier, pour autant que l'invention demeure telle que définie par les revendications.

## Revendications

1. Dispositif de verrouillage multi-positions d'un dossier rabattable (102) de siège arrière de véhicule automobile, comportant un verrou lié audit dossier (102) ainsi qu'une gâche (120) partiellement logée dans un boîtier support (130) fixé à un élément de structure (104) dudit véhicule,
ladite gâche (120) comprenant une platine (121) présentant une lumière (122) traversée par un organe de guidage à coulissement (131) solidaire dudit boîtier support (130), ladite platine (121) étant prolongée à l'avant par un organe d'accroche (123) saillant en permanence à l'avant dudit boîtier support (130) au travers d'une ouverture (132) ménagée sur sa face avant, ledit organe d'accroche (123) étant destiné à venir en prise avec un pêne que comprend ledit verrou pour verrouiller ledit dossier (102) sur ledit élément de structure (104) du véhicule ;
ladite gâche (120) étant apte, tout en demeurant en prise avec ledit verrou, à coulisser dans ledit boîtier support (130) selon une course prédéterminée, une portion de ladite lumière (122) de la platine (121) saillant à l'avant dudit boîtier support (130) au travers de ladite ouverture (132) sur une partie de ladite course de la gâche (120) ;
ledit dispositif comportant en outre des moyens de verrouillage (127, 133) de ladite gâche (120) sur ledit boîtier support (130) dans plusieurs positions ;
**caractérisé en ce qu'**il comporte en outre des moyens de protection anti-pincement comportant un soufflet (140) s'étendant à l'avant dudit boîtier support (130) depuis le pourtour de ladite ouverture (132) sur lequel il est fixé, ledit soufflet (140) étant traversé par ladite gâche (120) et agencé de sorte à entourer en permanence ladite portion saillante de ladite lumière (122) de la platine (121), et **en ce que** ledit organe d'accroche est constitué par un fil de gâche métallique (123) en U dont la base (124) forme un brin d'accroche apte à coopérer avec ledit pêne et dont les extrémités libres (125A, 126A) des deux branches (125, 126) sont fixées sur la portion avant de ladite platine (121), lesdits moyens de protection anti-pincement comportant en outre un élément rigide de fermeture (141) obturant partiellement l'extrémité avant dudit soufflet (140) entre les deux dites branches (125, 126) du fil de gâche (123), ledit élément de fermeture (141) étant apte à coopérer sur une partie de la course de ladite gâche (120) avec l'extrémité avant de ladite platine (121) ou avec l'extrémité libre recourbée (125A) de l'une (125) desdites branches (125, 126) de sorte à entrainer l'allongement vers l'avant dudit soufflet (140).

2. Dispositif de verrouillage selon la revendication 1, **caractérisé en ce que** ledit élément de fermeture (141) est rapporté puis fixé sur ledit soufflet (140) après la mise en place de ce dernier sur ledit boîtier support (130).

3. Dispositif de verrouillage selon la revendication 2, **caractérisé en ce que** ledit élément de fermeture (141) est fixé sur ledit soufflet (140) par soudage ultrasons.

4. Dispositif de verrouillage selon la revendication 1, **caractérisé en ce que** ledit organe d'accroche est constitué par un fil de gâche métallique (123) en U dont la base (124) forme un brin d'accroche apte à coopérer avec ledit pêne et dont les extrémités libres (125A, 126A) des deux branches (125, 126) sont fixées sur la portion avant de ladite platine (121), lesdits moyens de protection anti-pincement comportant en outre un élément de liaison rigide (143) s'étendant fixement entre les deux dites branches (125, 126) du fil de gâche (123) et sur lequel la portion avant dudit soufflet (140) est fixée.

5. Dispositif de verrouillage selon la revendication 4, **caractérisé en ce que** ledit élément de liaison (143) est constitué par deux demi-corps venus de moulage à partir d'un polymère thermoplastique éventuellement chargé en fibres minérales et assemblés l'un à l'autre par soudage ultrasons.

6. Dispositif de verrouillage selon l'une des revendications 4 ou 5, **caractérisé en ce que** ledit soufflet (140) est fixé audit élément de liaison (143) par rivetage.

7. Dispositif de verrouillage selon l'une des revendications 1 à 6, **caractérisé en ce que** ledit soufflet (140) est réalisé dans un matériau élastomère tel que le caoutchouc nitrile.

8. Dispositif de verrouillage selon l'une des revendications 1 à 7, **caractérisé en ce que** lesdits moyens de verrouillage (127, 133) de ladite gâche (120) sur ledit boîtier support (130) sont de type motorisés et permettent également de régler de manière continue la position de ladite gâche (120) par rapport audit boîtier support (130) sur l'ensemble de sa course.

9. Dispositif de verrouillage selon la revendication 8, **caractérisé en ce que** lesdits moyens de réglage et de verrouillage de ladite gâche (120) comportent une crémaillère (127) s'étendant le long de la majeure portion du bord supérieur de ladite platine (121) entre deux butées d'extrémité (128, 129), ladite crémaillère (127) coopérant avec un pignon denté (133) logé dans ledit boîtier support (130) et monté à rotation sur un axe transversal motorisé.

## Patentansprüche

1. Mehrstellungs-Verriegelungsvorrichtung für eine umklappbare Rückenlehne (102) eines Kraftfahrzeug-Rücksitzes, mit einem mit der Rückenlehne (102) verbundenen Riegel und einem Schließhaken (120), der teilweise in einem Trägergehäuse (130) untergebracht ist, das an einem Strukturelement (104) des Fahrzeugs befestigt ist,
wobei das Schließblech (120) eine Platte (121) aufweist, die einen Schlitz (122) aufweist, der von einem gleitenden Führungselement (131) durchquert wird, das fest mit dem Trägergehäuse (130) verbunden ist, wobei die Platte (121) vorne durch ein Einhakorgan (123) verlängert wird, das permanent an der Vorderseite des Trägergehäuses (130) durch eine an seiner Vorderseite vorgesehene Öffnung (132) vorsteht, wobei das Verriegelungselement (123) dazu bestimmt ist, mit einem in dem Schloss enthaltenen Riegel in Eingriff zu kommen, um die Rückenlehne (102) an dem Strukturelement (104) des Fahrzeugs zu verriegeln;
wobei der Schlagbolzen (120), während er mit dem Schloss in Eingriff bleibt, in der Lage ist, in dem Stützgehäuse (130) entlang einer vorbestimmten Bahn zu gleiten, wobei ein Abschnitt des Schlitzes (122) der Platte (121) an der Vorderseite des Stützgehäuses (130) durch die Öffnung (132) über einen Teil der Bahn des Schlagbolzens (120) vorsteht;
wobei die Vorrichtung ferner Mittel (127, 133) zum Verriegeln des Schlagbolzens (120) an dem Trägergehäuse (130) in einer Vielzahl von Positionen aufweist;
**dadurch gekennzeichnet, dass** sie außerdem Einklemmschutzmittel umfasst, die einen Faltenbalg (140) umfassen, der sich an der Vorderseite des Trägergehäuses (130) vom Umfang der Öffnung (132) aus erstreckt, an der sie befestigt ist, wobei der Balg (140) von dem Schlagbolzen (120) durchquert wird und so angeordnet ist, dass er den vorstehenden Teil des Schlitzes (122) der Platte (121) dauerhaft umgibt, und dass das Befestigungselement aus einem U-förmigen Schlagdraht (123) aus Metall besteht, dessen Basis (124) eine Befestigungslitze bildet, die mit dem Bolzen zusammenwirken kann, und dessen freie Enden (125A), 126A) der beiden Zweige (125, 126) am vorderen Teil der Platte (121) befestigt sind, wobei die Einklemmschutzvorrichtung ferner ein starres Verschlußelement (141) aufweist, das das vordere Ende des Balgs (140) zwischen den beiden Zweigen (125, 126) des Schlagdrahts (123) teilweise verschließt, wobei das Verschlusselement (141) in der Lage ist, über einen Teil des Hubs des Schlagbolzens (120) mit dem vorderen Ende der Platte (121) oder mit dem gekrümmten freien Ende (125A) eines (125) der Schenkel (125, 126) zusammenzuwirken, um die Ausdehnung des Balgs (140) nach vorne zu bewirken.

2. Verriegelungsvorrichtung nach Anspruch 1, **dadurch gekennzeichnet, dass** das Verschlusselement (141) mit dem Balg (140) verbunden und dann an diesem befestigt wird, nachdem dieser auf das Trägergehäuse (130) aufgesetzt worden ist.

3. Verriegelungsvorrichtung nach Anspruch 2, **dadurch gekennzeichnet, dass** das Verschlusselement (141) an dem Balg (140) durch Ultraschallschweißen befestigt ist.

4. Verriegelungsvorrichtung nach Anspruch 1, **dadurch gekennzeichnet, dass** das Sperrorgan aus einem U-förmigen metallischen Schlagdraht (123) besteht, dessen Basis (124) eine Sperrlitze bildet, die mit dem Riegel zusammenwirken kann, und dessen freie Enden (125A, 126A) der beiden Arme (125, 126) an dem vorderen Teil der Platte (121) befestigt sind, wobei die Einklemmschutzeinrichtung ferner ein starres Verbindungselement (143) aufweist, das sich fest zwischen den beiden Zweigen (125, 126) des Schlagdrahts (123) erstreckt und an dem der vordere Teil des Balgs (140) befestigt ist.

5. Verriegelungsvorrichtung nach Anspruch 4, **dadurch gekennzeichnet, dass** das Verbindungselement (143) aus zwei Halbkörpern besteht, die aus einem thermoplastischen Polymer geformt sind, das gegebenenfalls mit Mineralfasern gefüllt und durch Ultraschallschweißen miteinander verbunden ist.

6. Verriegelungsvorrichtung nach einem der Ansprüche 4 oder 5, **dadurch gekennzeichnet, dass** der Faltenbalg (140) an dem Verbindungselement (143) durch Nieten befestigt ist.

7. Verriegelungsvorrichtung nach einem der Ansprüche 1 bis 6, **dadurch gekennzeichnet, dass** der Faltenbalg (140) aus einem elastomeren Material wie Nitrilkautschuk hergestellt ist.

8. Verriegelungsvorrichtung nach einem der Ansprüche 1 bis 7, **dadurch gekennzeichnet, dass** die Mittel (127, 133) zur Verriegelung des Schließhakens (120) auf dem Trägergehäuse (130) vom motorisierten Typ sind und außerdem eine kontinuierliche Einstellung der Position des Schließhakens (120) in Bezug auf das Trägergehäuse (130) über seinen gesamten Weg ermöglichen.

9. Verriegelungsvorrichtung nach Anspruch 8, **dadurch gekennzeichnet, dass** die Einstell- und Verriegelungsmittel des Schlagbolzens (120) eine Zahnstange (127) umfassen, die sich entlang des größten Teils des oberen Randes der Platte (121) zwischen zwei Endanschlägen (128, 129) erstreckt, wobei die Zahnstange (127) mit einem Zahnritzel (133) zusammenwirkt, das in dem Trägergehäuse (130) untergebracht und drehbar auf einer motorisierten Querwelle montiert ist.

## Claims

1. Multi-position locking device for a folding backrest (102) of a motor vehicle rear seat, comprising a lock connected to said backrest (102) and a striker (120) partially housed in a support box (130) fixed to a structural element (104) of said vehicle,
said strike plate (120) comprising a plate (121) having a slot (122) through which a sliding guide member (131) integral with said support housing (130) passes, said plate (121) being extended at the front by a hooking member (123) projecting permanently at the front of said support housing (130) through an opening (132) provided on its front face, said attachment member (123) being designed to engage with a bolt included in said lock to lock said backrest (102) on said structural element (104) of the vehicle;
said striker (120) being capable, while remaining engaged with said latch, of sliding in said support box (130) along a predetermined path, a portion of said slot (122) of the plate (121) projecting at the front of said support box (130) through said opening (132) over part of said path of the striker (120);
said device further comprising means (127, 133) for locking said striker (120) on said support housing (130) in several positions;
**characterised in that** it further comprises anti-pinch protection means comprising a bellows (140) extending at the front of said support case (130) from the periphery of said opening (132) to which it is fixed, said bellows (140) being traversed by said striker (120) and arranged so as to permanently surround said projecting portion of said slot (122) of the plate (121), and **in that** said attachment member is constituted by a U-shaped metal striker wire (123) whose base (124) forms an attachment strand capable of cooperating with said bolt and whose free ends (125A), 126A) of the two branches (125, 126) are fixed to the front portion of said plate (121), said anti-pinch protection means further comprising a rigid closure element (141) partially closing the front end of said bellows (140) between the two said branches (125, 126) of the striker wire (123), said closure element (141) being able to cooperate over part of the travel of said striker (120) with the front end of said plate (121) or with the curved free end (125A) of one (125) of said legs (125, 126) so as to cause the forward extension of said bellows (140).

2. Locking device according to claim 1, **characterised in that** said closure element (141) is attached and then fixed to said bellows (140) after the latter has been placed on said support casing (130).

3. Locking device according to claim 2, **characterised in that** the said closure element (141) is fixed to the said bellows (140) by ultrasonic welding.

4. Locking device according to claim 1, **characterised in that** said latching device is constituted by a U-shaped metal striker wire (123) whose base (124) forms a latching strand capable of cooperating with said bolt and whose free ends (125A, 126A) of the two arms (125, 126) are fixed to the front portion of said plate (121), said anti-pinch protection means further comprising a rigid connecting element (143) extending fixedly between the two said branches (125, 126) of the striker wire (123) and to which the front portion of said bellows (140) is fixed.

5. Locking device according to claim 4, **characterised in that** the said connecting element (143) consists of two half-bodies moulded from a thermoplastic polymer optionally filled with mineral fibres and assembled together by ultrasonic welding.

6. Locking device according to one of claims 4 or 5, **characterised in that** said bellows (140) is fixed to said connecting element (143) by riveting.

7. Locking device according to one of claims 1 to 6, **characterized in that** said bellows (140) is made of an elastomeric material such as nitrile rubber.

8. Locking device according to one of claims 1 to 7, **characterised in that** the means (127, 133) for locking the said striker (120) on the said support housing (130) are of the motorised type and also allow the position of the said striker (120) to be adjusted continuously with respect to the said support housing (130) over its entire travel.

9. Locking device according to claim 8, **characterised in that** said means for adjusting and locking said strike plate (120) comprise a rack (127) extending along the major portion of the upper edge of said plate (121) between two end stops (128, 129), said rack (127) cooperating with a toothed pinion (133) housed in said support housing (130) and mounted to rotate on a motorised transverse shaft.
